# EUROPEAN PATENT APPLICATION

(11) **EP 3 441 889 A1**
(43) Date of publication of application: **13.02.2019**
(21) Application number: 17778821.3
(22) Date of filing: 16.01.2017
(51) Int. Cl.: G06F 17/30

(54) **INFORMATION PROCESSING DEVICE AND INFORMATION PROCESSING METHOD**

(30) Priority: 08.04.2016 JP 2016078499
(71) Applicant: Sony Corporation, Tokyo 108-0075 (JP)
(72) Inventor: WATANABE, Hideaki, Tokyo 108-0075 (JP)
(74) Representative: MFG Patentanwälte Meyer-Wildhagen Meggle-Freund Gerhard PartG mbB
(86) International application number: PCT/JP2017/001261
(87) International publication number: WO 2017/175442

(57) **Abstract**

[Object] To provide an information processing apparatus and an information processing method in which it is possible to perform a response suitable under various environments and easy to understand by outputting the response in accordance with a context.

[Solution] The information processing apparatus includes: a first transmitting section configured to transmit utterance information that has been input; a second transmitting section configured to transmit context information that has been acquired; and an output control section configured to perform control such that response information for the utterance information is output to an output destination determined on a basis of the context information.

## Description

### Technical Field

The present disclosure relates to an information processing apparatus and an information processing method.

### Background Art

In recent years, the development of the technology has been performed that executes voice recognition and meaning analysis for the utterance voice of a user and responds with voice. In particular, owing to the progress in voice recognition algorithm and the development in computer technology in these days, it has become possible to perform a voice recognizing process in a practical time. Accordingly, UI (user interface) using voice has been spreading in smart phones, tablet terminals, and so on.

With regard to voice input, for example, Patent Literature 1 described later discloses a multimodal information analyzing apparatus that analyzes integratedly a direct instruction, such as a human's gesture and a visual line, and human's utterance voice and outputs the analysis results as user's attentional information as to how a human takes an attention to what.

### Citation List

### Patent Literature

Patent Literature 1: JP 2000-231427A

### Disclosure of Invention

### Technical Problem

Here, since a response output from a system is presented without taking a user's situation and environment into consideration, there has been a case where it is difficult for a user to understand response results.

Then, in the present disclosure, an information processing apparatus and an information processing method are proposed in which it is possible to perform a response suitable under various environments and easy to understand by outputting the response in accordance with a context.

### Solution to Problem

According to the present disclosure, there is provided an information processing apparatus including: a first transmitting section configured to transmit utterance information that has been input; a second transmitting section configured to transmit context information that has been acquired; and an output control section configured to perform control such that response information for the utterance information is output to an output destination determined on a basis of the context information.

According to the present disclosure, there is provided an information processing apparatus including: a first receiving section configured to receive utterance information that has been input; a second receiving section configured to receive context information that has been acquired; and an output control section configured to perform control such that response information created on a basis of the utterance information is output to an output destination determined on a basis of the context information.

According to the present disclosure, there is provided an information processing method including: by a processor, transmitting utterance information that has been input; transmitting context information that has been acquired; and performing control such that response information for the utterance information is output to an output destination determined on a basis of the context information.

According to the present disclosure, there is provided an information processing method including: by a processor, receiving utterance information that has been input; receiving context information that has been acquired; and performing control such that response information created on a basis of the utterance information is output to an output destination determined on a basis of the context information.

### Advantageous Effects of Invention

As described in the above, according to the present disclosure, it becomes possible to perform a response suitable under various environments and easy to understand by outputting the response in accordance with a context.

Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is an illustration for describing an outline of an information processing apparatus according to the present embodiment.
[FIG. 2] FIG. 2 is a diagram for describing a whole constitution of a system according to the present embodiment.
[FIG. 3] FIG. 3 is a block diagram showing one example of a constitution of an information processing apparatus according to the present embodiment.
[FIG. 4] FIG. 4 is a diagram showing a functional constitution example of a control section according to the present embodiment.
[FIG. 5] FIG. 5 is a block diagram showing one example of a constitution of a server according to the present embodiment.
[FIG. 6] FIG. 6 is a diagram showing a concrete example of information to be analyzed by an utterance meaning analyzing section according to the present embodiment.
[FIG. 7] FIG. 7 is a diagram showing a concrete example of context information according to the present embodiment.
[FIG. 8] FIG. 8 is a diagram showing a concrete example of response information according to the present embodiment.
[FIG. 9] FIG. 9 is a sequence diagram showing response control processing according to the present embodiment.

### Mode(s) for Carrying Out the Invention

Hereinafter, (a) preferred embodiment(s) of the present disclosure will be described in detail with reference to the appended drawings. Note that, in this specification and the appended drawings, structural elements that have substantially the same function and structure are denoted with the same reference numerals, and repeated explanation of these structural elements is omitted.

Moreover, the description shall be given in the following order.
1. Outline of information processing apparatus according to one embodiment of present disclosure
2. Constitution
   2-1. Constitution of information processing apparatus 1
   2-1. Constitution of server 2
3. Operation
4. Conclusion

### <1. Outline of information processing apparatus according to one embodiment of present disclosure>

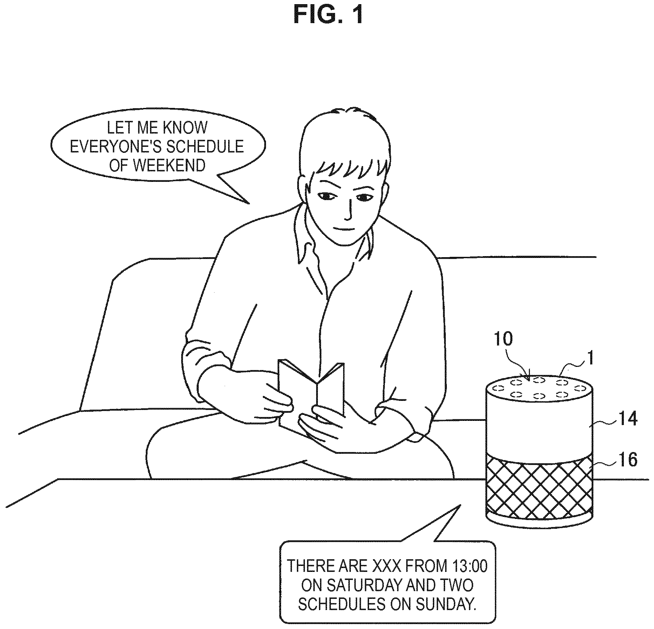

First, an outline of an information processing apparatus according to one embodiment of the present disclosure is described. FIG. 1 is an illustration for describing an outline of an information processing apparatus 1 according to the present embodiment. As shown in FIG. 1, the information processing apparatus 1 according to the present embodiment includes a voice input section 10 (for example, microphone array) and a voice output section 16, and, has an agent function to realizes a voice dialogue with a user. In concrete terms, the information processing apparatus 1 acquires the utterance voice of a user by the voice input section 10, and, returns the response information relative to the user's utterance from the voice output section 16 to the user. For example, in the case of receiving an inquiry about the weather of tomorrow from a user, the information processing apparatus 1 responds to the user with the weather information of tomorrow.

Furthermore, the information processing apparatus 1 according to the present embodiment may include an image output section 14, and at the time of responding to the user, it is possible to display image information.

Moreover, the information processing apparatus 1 according to the present embodiment may be a stationary type home agent apparatus as shown in FIG. 1, or, may be a self-travel type home agent apparatus (for example, robot). Moreover, the information processing apparatus 1 may be mobile terminals, such as a smart phone, a tablet terminal, a mobile phone terminal, and a wearable terminal, or may be a personal computer, a game machine, a music player, an in-vehicle terminal, or the like.

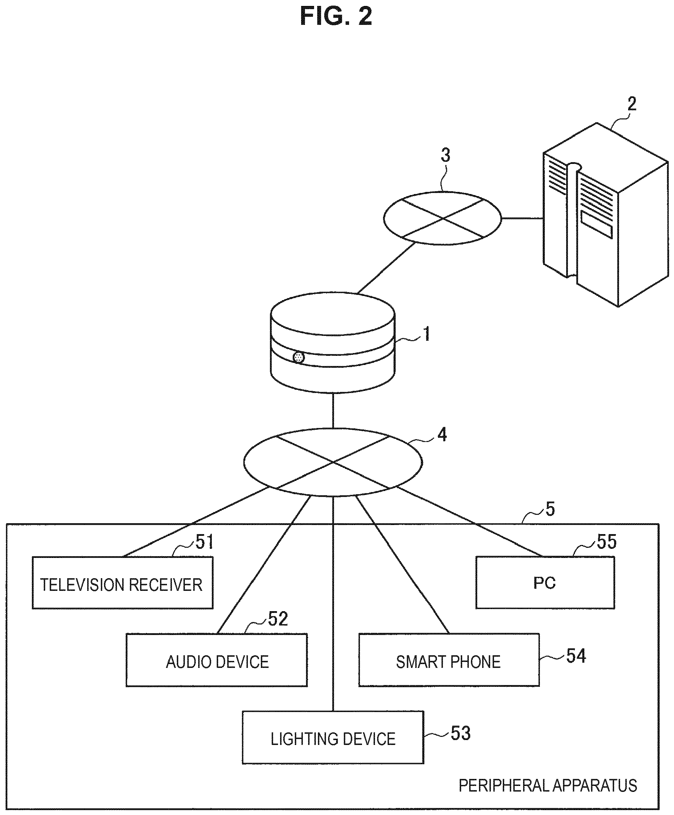

Moreover, the information processing apparatus 1 according to the present embodiment may be connected with the server 2, may perform transmission and reception of data with the server 2, and may perform response processing to a user. An entire constitution of a system including the information processing apparatus 1 and the server 2 according to the present embodiment is described with reference to FIG. 2. As shown in FIG. 2, the information processing apparatus 1 is connected with the server 2 through a network 3, or, is connected with various types of devices (peripheral apparatuses 5) in a home through a home network 4. The peripheral apparatuses 5 are various types of devices that exist in the periphery of the information processing apparatus 1 (or in the periphery of a user), and, include a voice output section, a display output section, a lighting output section and the like. In concrete terms, for example, a television receiver 51, an audio device 52, a lighting device 53, a smart phone 54, and a PC 55 are assumed. As the home network 4, for example, Wi-Fi (registered trademark), infrared ray communication, or Bluetooth (registered trademark) may be used.

Here, in the existing voice dialogue systems, since a response is output without taking a user's situation and environment into consideration, there has been a case where it is difficult for a user to understand response results. For example, in the case where voice response has been made with a long sentence from a system, it was difficult for a user to understand. Moreover, even if being responded with voice when being watching a television receiver or being operating a cleaning device, there has been a case where it is difficult to hear. Moreover, even if a notice is transmitted from a system when a user is telephoning, there has been a case where it is difficult to notice it or to direct an attention to it. Furthermore, for example, when checking the shared family schedule, even if the schedule including a key word etc. that only a person who input the schedule understands is presented as it is, there has been a problem that a user (speaking person) cannot understand the contents.

Then, in the present disclosure, by outputting a response correspondingly to a context, it is made possible to perform the response that is suitable for various environments and easily understandable. In concrete terms, for example, the information processing apparatus 1 acquires a user's context (for example, who is hearing, time, a user's action and situation, an environment condition, a user's schedule, etc.), and, presents a response with a suitable output format, output destination (output section), and output timing corresponding to the user's context, whereby response contents are made to be easily understood by the user.

In the above, the outline of the information processing apparatus 1 according to the present embodiment and the outline of the whole system have been described. Successively, a constitution of the information processing apparatus 1 and the server 2 according to the present embodiment will be described sequentially.

### <2. Constitution>

### <2-1. Constitution of information processing apparatus 1>

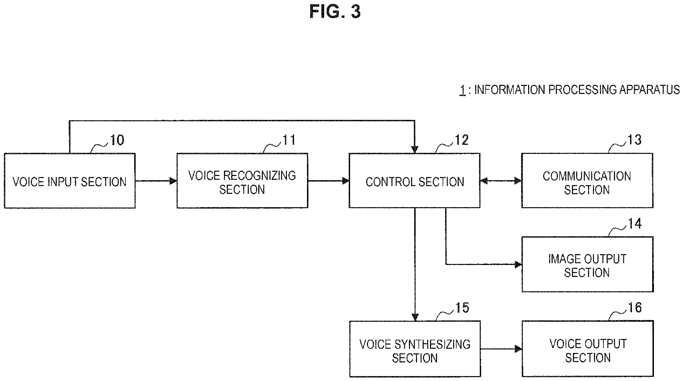

FIG. 3 is a block diagram showing one example of a constitution of the information processing apparatus 1 according to the present embodiment. As shown in FIG. 3, the information processing apparatus 1 includes a voice input section 10, a voice recognizing section 11, a control section 12, a communication section 13, an image output section 14, a voice synthesizing section 15, and a voice output section 16.

The voice input section 10 picks up user's voice and surrounding environmental sound, and, outputs voice signals to the voice recognizing section 11. In concrete terms, the voice input section 10 is realized by a microphone, an amplifier, and so on. Moreover, the voice input section 10 may be realized by a microphone array that includes a plurality of microphones.

The voice recognizing section 11 performs voice recognition for the voice signals output from the voice input section 10, and, textualizes the utterance voice of a user. The textualized utterance data is output to the control section 12.

The control section 12 functions as an arithmetic processing apparatus and a control apparatus, and, controls the whole operation in the information processing apparatus 1 in accordance with various kinds of programs. The control section 12 is realized by, for example, electronic circuits, such as a CPU (Central Processing Unit) and a microprocessor. Moreover, the control section 12 may include a ROM (Read Only Memory) that memorizes programs to be used, calculation parameters, etc. and a RAM (Random Access Memory) that memorizes temporarily parameters etc. that change appropriately.

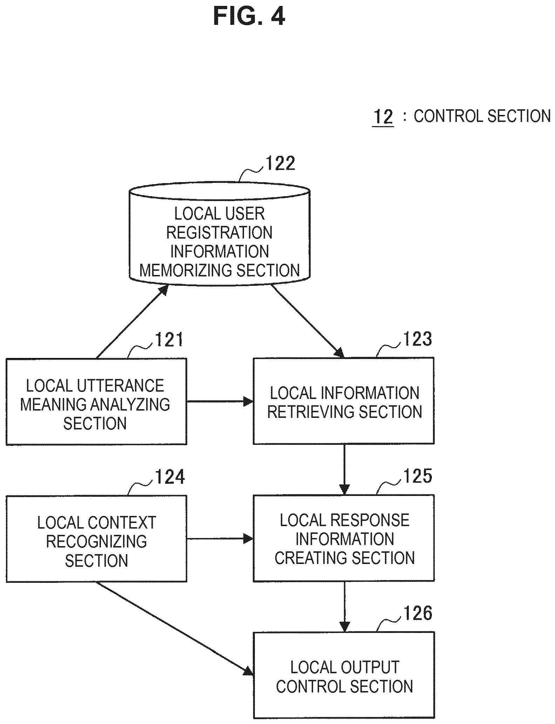

Moreover, the control section 12 according to the present embodiment outputs utterance information (response information) responding to user utterance data (text information) output from the voice recognizing section 11 and spontaneous utterance information (notice etc. to a user) to the image output section 14 or the voice synthesizing section 15. For example, the control section 12 may transmit utterance information based on user utterance input with voice from the communication section 13 to the server 2, may output response information returned from the server 2 and received by the communication section 13 to the image output section 14 or the voice synthesizing section 15, or, may output the response information from the communication section 13 to the peripheral apparatuses 5 in a home network 4. A detailed constitution of the control section 12 will be mentioned later with reference to FIG. 4.

The communication section 13 is a communication module that performs transmission and reception of data with other apparatuses by wire/wireless. The communication section 13 communicates wirelessly with external devices directly or via network access points in systems, such as wired LAN (Local Area Network), wireless LAN, Wi-Fi (Wireless Fidelity, registered trademark), infrared ray communication, Bluetooth (registered trademark), and short distance / non-contact communication.

Moreover, the communication section 13 connects with the server 2, and performs transmission and reception of predetermined data. For example, the communication section 13 transmits utterance information based on user utterance to the server 2, or, receives response information etc. to the user utterance from the server 2. In the present specification, "utterance information" includes, in addition to information of utterance input by a user, one in which all or some of this information has been recognized, analyzed, assayed/ presumed and has been converted into the other formats, such as a voice format, a text format, or a vector format of a feature amount. Moreover, the communication section 13 transmits device information and sensor information acquired from the peripheral apparatuses 5 etc. to the server 2.

Moreover, the communication section 13 according to the present embodiment receives various kinds of information from, for example, a camera, a user terminal (for example, smart phone), and sensors. The sensors may be disposed in a user terminal, may be disposed in a wearable terminal that a user wears, or may be installed on a door or sofa of a room, a corridor, or the like. As the sensors, for example, a gyro sensor, an acceleration sensor, an azimuth sensor, a position measuring section, a biosensor, etc. may be assumed.

The image output section 14 is realized by, for example, a liquid crystal display (LCD) apparatus, an OLED (Organic Light Emitting Diode) apparatus, and so on. The image output section 14 displays image information output from the control section 12 for a user.

The voice synthesizing section 15 converts (conversion to voice) the utterance information (text) output from the control section 12 into voice data, and outputs to the voice output section 16.

The voice output section 16 outputs the voice data output from the voice synthesizing section 15 to a user. In concrete terms, the voice output section 16 is realized by a speaker, an amplifier, and so on.

### (Detailed constitution of control section 12)

Successively, with reference to FIG. 4, a detailed constitution of the control section 12 according to the present embodiment is explained. FIG. 4 is a diagram showing a functional constitution example of the control section 12 according to the present embodiment.

As shown in FIG. 4, the control section 12 according to the present embodiment functions as a local utterance meaning analyzing section 121, a local user registration information memorizing section 122, a local information retrieving section 123, a local context recognizing section 124, a local response information creating section 125, and a local output control section 126.

The local utterance meaning analyzing section 121 applies so-called natural language processing for the utterance data (text) input from the voice recognizing section 11, and performs extraction of keywords under utterance, presumption of user's utterance intention, and the like. The local utterance meaning analyzing section 121 according to the present embodiment is a subset of a later-mentioned utterance meaning analyzing section 201 of the server 2, and, has a simple utterance meaning analyzing function.

The local user registration information memorizing section 122 memorizes user Information (profile) and information (referred to as user registration information) registered by a user. The local user registration information memorizing section 122 according to the present embodiment is a subset of a later-mentioned user registration information memorizing section 22 of the server 2, and an amount of data to be memorized is little (for example, it memorizes information having been registered in the last three months).

In the case where a user's request is "retrieval", the local information retrieving section 123 performs retrieval from the local user registration information memorizing section 122 on the basis of a retrieval keyword extracted by the local utterance meaning analyzing section 121 or the utterance meaning analyzing section 201. The local information retrieving section 123 according to the present embodiment is a subset of a later-mentioned information retrieving section 202 of the server 2, and has a simple information retrieving function.

The local context recognizing section 124 recognizes and presumes the context of a user (speaking person) one by one, and, outputs context information. For example, the local context recognizing section 124 recognizes (presumes) user's context on the basis of sensor information (voice information, image information, sensor values, etc.) acquired by a microphone, a camera, or various kinds of sensors disposed on the information processing apparatus 1, or peripheral apparatuses (a television receiver 51, a smart phone 54, a lighting device 53, etc.) connected with the information processing apparatus 1 by wireless/wire, or device information. The local context recognizing section 124 according to the present embodiment is a subset of a later-mentioned context recognizing section 203 of the server 2, and has a simple context recognizing function.

The local response information creating section 125 creates information with regard to a response to the user's utterance. For example, the local response information creating section 125 according to the present embodiment creates response information corresponding to contexts, such as a user situation and environments on the basis of retrieval results and context information. The local response information creating section 125 according to the present embodiment is a subset of a later-mentioned response information creating section 204 of the server 2, and, has a simple response information creating function. In this connection, the response information includes information on response contents, output formats (voice output, text output, image output, or optical output), and an output section (output destination: for example, the information processing apparatus 1, or, peripheral apparatuses 5 such as a voice output apparatus, a display apparatus, an information processing terminal, or, a lighting device).

The local output control section 126 controls so as to output response information with an optimum output format and output destination corresponding to the user's context on the basis of the response information created by the local response information creating section 125 or the response information creating section 204 and the context information. In concrete terms, the local output control section 126 creates output information including response information, an output starting condition, and an output ending condition, and, outputs to the optimal output destination. The local output control section 126 according to the present embodiment is a subset of a later-mentioned output control section 205 of the server 2, and, has a simple output control function.

In this connection, the output information output from the local output control section 126 is output to the peripheral apparatuses 5 via the image output section 14, the voice synthesizing section 15, or the communication section 13. In the case of being output to the image output section 14, the response contents (a text, an image) is displayed on a screen, or, projected on a wall. Moreover, in the case of being output to the voice synthesizing section 15, the response contents are made to voice, and, is reproduced from the voice output section 16. Moreover, in the case of being transmitted to the television receiver 51, the audio device 52, the lighting device 53, the smart phone 54, the PC 55, and so on in the periphery, which are connected by wire/wireless via the communication section 13, it is presented for a user by a text, a voice, or the like, from these peripheral apparatuses 5.

In the above, the description has been given concretely for the constitution of the information processing apparatus 1 according to the present embodiment. In this connection, the constitution of the information processing apparatus 1 according to the present embodiment should not limited to the example shown in FIG. 3 and FIG. 4. For example, the information processing apparatus 1 may have a constitution that does not include all or some of the local utterance meaning analyzing section 121, the local user registration information memorizing section 122, the local information retrieving section 123, the local context recognizing section 124, and the local response information creating section 125. Moreover, the information processing apparatus 1 may include a motion sensor or camera.

Moreover, in the case where the processing by the local user registration information memorizing section 122, the local information retrieving section 123, the local context recognizing section 124, or the local response information creating section 125 cannot cope with, the information processing apparatus 1 may require the corresponding processing for the server 2. Moreover, while the information processing apparatus 1 performs processing at the local user registration information memorizing section 122, the local information retrieving section 123, the local context recognizing section 124, or the local response information creating section 125, it requests the corresponding processing for the server 2, and any one of processing results may be made to be used.

### <2-2. Constitution of server 2>

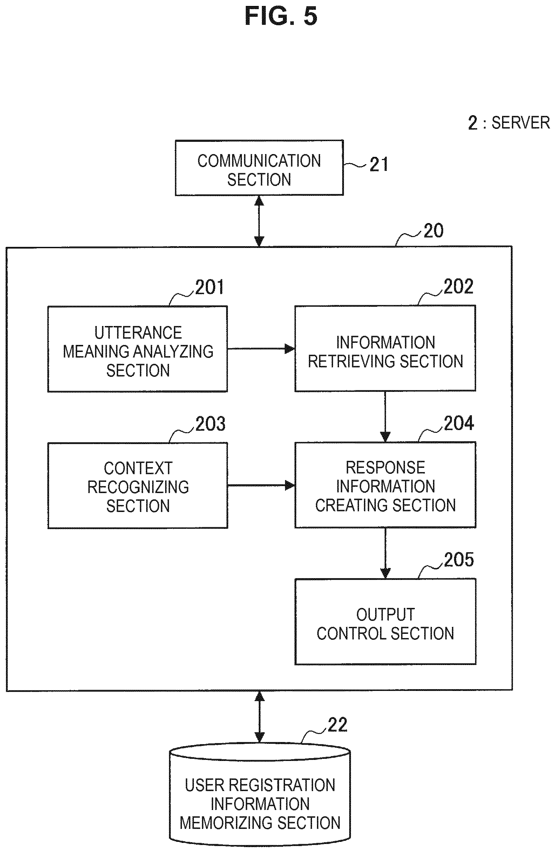

Next, with reference to FIG. 5, a constitution of the server 2 according to the present embodiment is described. FIG. 5 is a block diagram showing one example of a constitution of the server 2 according to the present embodiment.

As shown in FIG. 5, the server 2 according to the present embodiment includes a control section 20, a communication section 21, and a user registration information memorizing section 22.

The communication section 21 connects with an external device, and, performs transmission and reception of data. For example, the communication section 21 receives utterance information and sensor information from the information processing apparatus 1, and, transmits response information created by a later-mentioned response information creating section 204 to the information processing apparatus 1.

The user registration information memorizing section 22 memorizes user information (profile) and information (referred to as user registration information) registered by a user. For example, as the user registration information, plan (schedule), memorandum (memo), and message to other users, etc. are assumed.

The control section 20 functions as a calculation processing apparatus and a control apparatus, and, controls the whole operation in the server 2 in accordance with various kinds of programs. The control section 20 is realized by, for example, electronic circuits, such as a CPU and a microprocessor. Moreover, the control section 20 may include a ROM that memorizes programs to be used, calculation parameters, etc. and a RAM that memorizes temporarily parameter etc. that change appropriately.

The control section 20 according to the present embodiment functions, as shown in FIG. 5, as the utterance meaning analyzing section 201, the information retrieving section 202, the context recognizing section 203, the response information creating section 204, and the output control section 205.

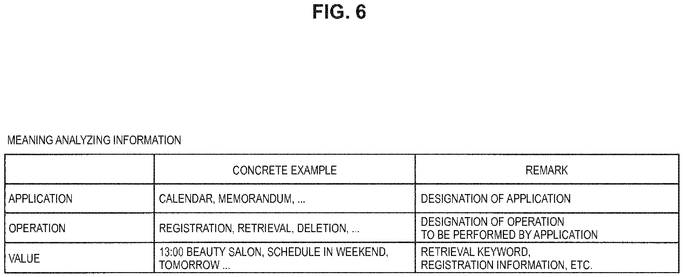

The utterance meaning analyzing section 201 applies so-called natural language processing for the utterance information transmitted from the information processing apparatus 1, and, performs extraction of keywords under utterance, presumption of user's utterance intention, and the like. As the utterance information, assumed are various items, such as data textualized by the voice recognizing process, for example, "a piano class from 10:00 on February 28", "what is a schedule for today?" and so on. The utterance meaning analyzing section 201 according to the present embodiment analyzes, for example, what kind of a request is being made by a user (want to register information, want to retrieve, and the like), and, extracts the information and retrieval keyword of a registration target from utterance data. In the case where a user's request is "registration", the information on the extracted registration target is stored in the user registration information memorizing section 22. Moreover, in the case where a user's request is " retrieval", the extracted retrieval keyword is output to the information retrieving section 202. Here, a concrete example of information to be analyzed by the utterance meaning analyzing section 201 is shown in FIG. 6. As shown in the diagram, for example, application (calendar application, memorandum application, etc.), presumption of operation contents (registration, retrieval, deletion, etc.) performed with the application, and extraction of values ("13:00 beauty salon", "schedule in a weekend", "tomorrow", etc.) of a retrieval keyword, registration information, etc. are performed.

In the case where a user's request is "retrieval", the information retrieving section 202 performs retrieval from the user registration information memorizing section 22 on the base of the retrieval keyword extracted by the utterance meaning analyzing section 201, and outputs the results to the response information creating section 204. For example, in the case of a request that "let me know everyone's schedule of a weekend", the information retrieving section 202 retrieves the schedule of "a weekend" from the schedule information of the whole family members (here, the matter that "everyone" means "a family" is presumed by the utterance meaning analyzing section 201) registered in the user registration information memorizing section 22.

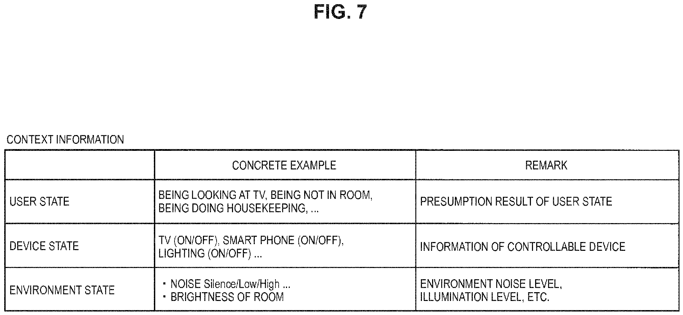

The context recognizing section 203 recognizes and presumes user's (speaking person) contexts one by one, and outputs context information. In concrete terms, the context recognizing section 203 recognizes (presumes) a user's context on the basis of the sensor information transmitted from the information processing apparatus 1. Such sensor information includes information (voice information, image information, sensor values, etc.) acquired by a microphone, a camera, or various kinds of sensors disposed on the information processing apparatus 1, or the peripheral apparatuses 5 (the television receiver 51, the audio device 52, the lighting device 53, the smart phone 54, etc.) connected with the information processing apparatus 1 by wire/wireless. Moreover, it is also possible for the context recognizing section 203 to recognize (presume) a user's context on the basis of device information (ON/OFF information, operation information, etc.) of the information processing apparatus 1, the peripheral apparatuses 5, and the like transmitted from the information processing apparatus 1. As the user's context, assumed are, for example, who is the user (discrimination of a speaking person), a user state (presumption of a user's visual line direction from an action, a situation, and an image, and presumption of an object with a user's attention on the basis of the above presumption of a user's visual line direction), an environment state (a user's environment as to whether a user is alone or with a plurality of persons, and a user's position), or a device state (a state of devices existing around a user). The context information includes the above-mentioned user state, environment state, and device state that are obtained directly from images, voice, and various kinds of sensor information, and, in addition, includes information that is obtained indirectly as a result of recognizing, analyzing, assaying, presuming the above information. Here, a concrete example of context information is shown in FIG. 7. As shown in the diagram, as the user state, for example, being looking at TV, being not in the room, being doing housekeeping, etc. are presumed. Moreover, as the device state, the device information capable of being controlled by the information processing apparatus 1, in concrete terms, the states of ON/OFF of the television receiver 51, the smart phone 54, and the lighting device 53, etc. are recognized. Moreover, as the environment state, a noise level (annoyance), an illumination level (brightness) of a room, etc. are recognized.

The response information creating section 204 creates information with regard to a response relative to a user's utterance. For example, the response information creating section 204 according to the present embodiment creates response information correspondingly to the context, such as the user situation and the environment on the basis of the retrieval results output from the information retrieving section 202 and the context information output from the context recognizing section 203. In concrete terms, on the basis of the retrieval results and the context information, the response information creating section 204 creates response information including the contents of a response, the designation of the output format (voice, a text, write, etc.), and the designation of an output destination (the information processing apparatus 1, the television receiver 51, the audio device 52, the smart phone 54, the lighting device 53, the PC 55, etc.). Moreover, the response information creating section 204 may create a plurality of pieces of response information capable of serving as the candidates of an output, and, may output to the output control section 205.

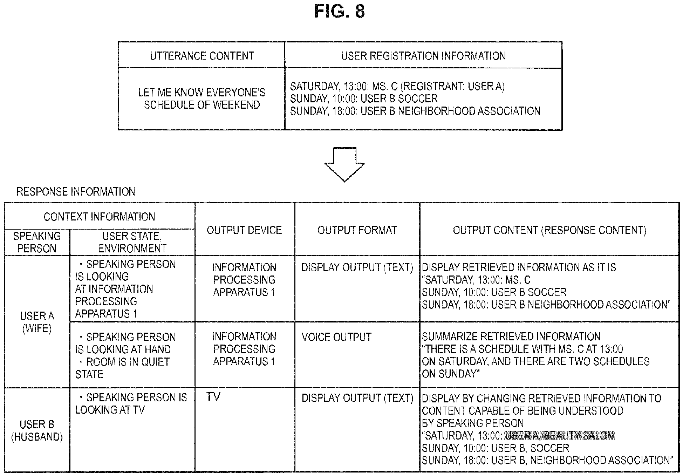

Here, a concrete example of the response information is shown in FIG. 8. In FIG. 8, all of the contents of utterance relate to an inquiry ("let me know everyone's schedule of a weekend") with regard to the schedule of a weekend, and in the case where, on the basis of the meaning analyzing results of this utterance, the information retrieving section 202 has retrieved the following user registration information:
"Saturday, 13:00: Ms. C (a registrant: a user A)
Sunday, 10:00: a user B Soccer
Sunday, 18:00: a user B Neighborhood association",
an example of the response information is shown. In concrete terms, the response information created in the case where the speaking persons are the user A and the user B is shown. Here, it is assumed a case where the user A and the user B are family members (husband and wife), use the information processing apparatus 1 as a home agent, and, share their respective schedules.

As shown in the response information example in FIG. 8, for example, the response information creating section 204 creates the context information of "a speaking person: the user A (wife)" and "a user state: the speaking person is looking at the information processing apparatus 1" and the response information of "an output device: the information processing apparatus 1", "an output format: display output (text)", and "an output content (response content): display retrieved information as it is" correspondingly to the above-described retrieved results. Here, since the user A is directing the visual line toward the information processing apparatus 1, by displaying the response information on the information processing apparatus 1, it becomes possible to enable the user to understand the response information easily. Moreover, owing to the format of display output, even if a sentence long to a certain extent (here, all the contents of three schedules of a weekend) is output as it is, a user can understand easily. Accordingly, it is assumed that the retrieved user registration information will be displayed as it is.

Moreover, as shown in the response information example in FIG. 8, for example, the response information creating section 204 creates the context information of "a speaking person: the user A (wife)" and "a user state: the speaking person is looking at the hand of oneself, an environment: a room is in a quiet state" and the response information of "an output device: the information processing apparatus 1", "an output format: voice output", and "an output content (response content): summarize the retrieved information" correspondingly to the above-described retrieved results. Here, the user A is looking at the hand of oneself, and the room is in a quiet state. Accordingly, by outputting the response information with voice, it becomes possible to enable the user to understand the response information easily. Moreover, owing to the format of voice output, even if a long sentence is output, it is difficult for a user to understand it. Accordingly, by summarizing the retrieval user registration information, it becomes possible to enable the user to understand easily.

Moreover, as shown in the response information example in FIG. 8, for example, the response information creating section 204 creates the context information of "a speaking person: the user B (husband)" and "a user state: the speaking person is looking at TV" and the response information of "an output device: TV", "an output format: display output (text)", and "an output content (response content): display by changing the retrieved information to contents capable of being understood by the speaking person" correspondingly to the above-described retrieved results. Here, since the user B is looking at TV, by displaying the response information on the television receiver 51, it becomes possible to enable the user to understand the response information easily. Moreover, among the retrieved user registration information, in the case where, in the information registered by the user A, a proper noun "Ms. C" is used like "Saturday 13:00: Ms. C", it is difficult for a person other than the person having registered to understand what kind of a schedule it is. Then, for example, in the case where knowledge database with regard to the family has been constructed in advance, the response information creating section 204 changes to response contents capable of being understood easily by a person other than the person having registered, by using the knowledge database. In concrete terms, for example, in the case where the information of "Ms. C: a hairdresser in OO beauty salon" has been extracted from the knowledge database, the response information creating section 204 creates the response contents capable of being understood also by the user B by changing "Saturday, 13:00: Ms. C" to "Saturday, 13:00: the user A OO beauty salon".

In the above, the response information example according to the present embodiment has been described. In the above-mentioned example, the description has been given for the case where the response information creating section 204 changes the response contents correspondingly to the context information. However, the present embodiment should not be limited to this, and, for example, the response contents may be changed correspondingly to retrieval results. In concrete terms, for example, in the case where the number of retrieval results is one, the response is made with "voice". However, in the case where the number of retrieval results is plural, the response may be made with "display (or, projection by a projector)". This is because, in the case where there are many retrieval results, as compared with listening by voice, viewing the display screen makes it easier to understand.

Moreover, the response information creating section 204 according to the present embodiment may create the response information corresponding to a plurality of contexts, and, may output a plurality of pieces of created response information to the output control section 205. For example, in the case of the speaking person is the user A, a plurality of pieces of response information are created so as to correspond to respective different contexts such as "a user state: a case of looking at the information processing apparatus 1" and "a user state: a case of looking at the hand of oneself (other than the information processing apparatus 1)" as shown in FIG. 8, and, are output to the output control section 205.

The output control section 205 controls on the basis of the response information created by the response information creating section 204 and the context information so as to output response information with an optimal output format and output destination correspondingly to a user's context. In concrete terms, the output control section 205 creates output information including the response information, and, outputs to an optimal output destination. Here, since the contexts change sequentially, it is also possible for the output control section 205 to select the optimal response information correspondingly to user's real time context information at the time of output, and to output as output information.

In this connection, the output information output from the output control section 205 is output to the image output section 14, the voice synthesizing section 15, the peripheral apparatuses 5, or the like of the information processing apparatus 1. In the case of being output to the image output section 14, the response contents (a text, an image) are displayed on a screen, or, projected on a wall and the like. wall. Moreover, in the case of being output to the voice synthesizing section 15, the response contents are made to voice, and, are reproduced from the voice output section 16. Moreover, in the case of being transmitted to the peripheral apparatuses 5, such as the television receiver 51, the audio device 52, the lighting device 53, the smart phone 54, and the PC 55 in the user's periphery, it is presented with a text, voice, and the like for a user from these peripheral apparatuses 5. In this connection, to the peripheral apparatuses 5, the output information may be transmitted via the information processing apparatus 1.

Moreover, it is also possible for the output control section 205 to control an output timing correspondingly to the context information. In concrete terms, the output control section 205 creates an optimal output starting condition and output ending condition correspondingly to the context information, makes them to be included in the output information, and, outputs to an output destination. As the output starting condition, for example, "immediately, time designation (15:00 etc.), user's state designation (after ending a telephone, etc.)", and the like may be listed up. Moreover, as the output ending condition, "number-of-times designation (only one time etc.), time designation (for 60 seconds etc.), and user's state designation (until a user comes out from the room etc.)", and the like may be listed up. With this, for example, when the noise of the user's environment has become quiet (when cleaning etc. have been completed), it becomes possible to present response information by voice.

In the above, the constitution of the server 2 according to the present embodiment has been described concretely. In this connection, the constitution of the server 2 according to the present embodiment should not be limited to the example shown in FIG. 5. For example, all or some of the utterance meaning analyzing section 201, the information retrieving section 202, the context recognizing section 203, the response information creating section 204, the output control section 205, and the user registration information memorizing section 22 of the server 2 may be disposed in an external device (for example, the information processing apparatus 1).

Moreover, processing in at least any of the utterance meaning analyzing section 201, the information retrieving section 202, the context recognizing section 203, the response information creating section 204, and the output control section 205 may be performed by a corresponding subset at the information processing apparatus 1 side, and the processing result may be received from the information processing apparatus 1, and, may be used at the server 2 side.

### <3. Operation>

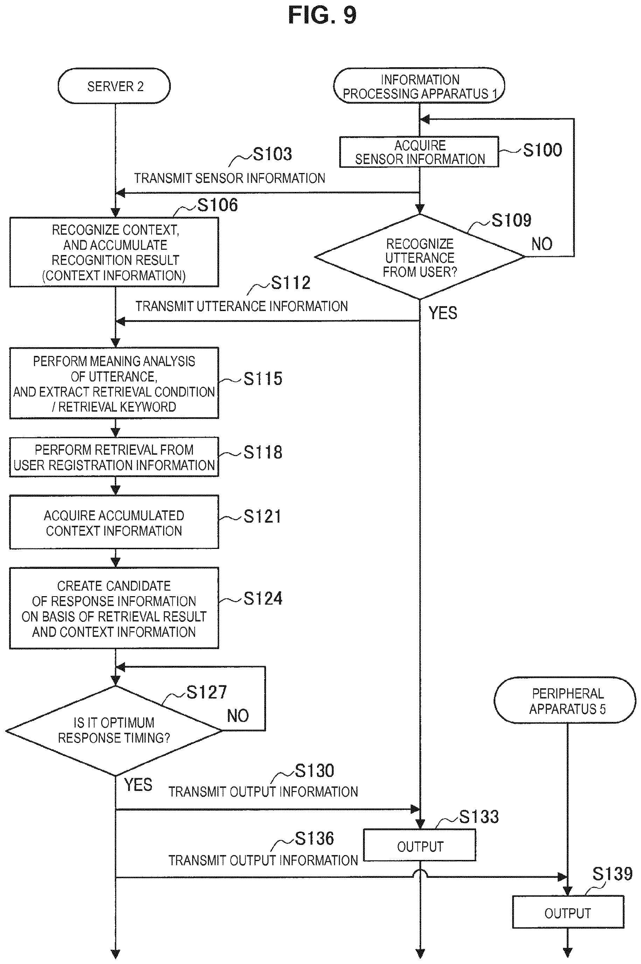

Successively, operation processing according to the present embodiment is described with reference to FIG. 9. FIG. 9 is a sequence diagram showing response control processing according to the present embodiment. The response control processing according to the present embodiment is executed by a system (application program) started by the information processing apparatus 1 and by a system (application program) started by the server 2.

As shown in FIG. 9, first, the information processing apparatus 1 acquires sensor information (Step S100), and, transmits to the server 2 (Step S103). The sensor information may be, for example, an imaged image, picked-up voice, or various kinds of sensor values, and, may be detected by a camera, a microphone, a sensor, etc. that are disposed in the information processing apparatus 1, the peripheral apparatuses 5, or the like. The sensor information transmitted to the server 2 may be the detected raw data, or, may be data having been subjected to predetermined processing, such as feature amount extraction from the raw data.

Next, the context recognizing section 203 of the server 2 recognizes the context on the basis of the sensor information, and, accumulates recognition results (context information) (Step S106). In this connection, context recognizing and accumulating processes shown in Steps S100 to S106 may be performed sequentially while performing processes from Step 109 onward.

Then, upon recognition of the utterance from a user (Steps S109/Yes), the information processing apparatus 1 transmits utterance information to the server 2 (Step S112). The utterance information to be transmitted to the server 2 may be voice data of the picked-up user's utterance, text data texturized by the voice recognizing process, and, in addition, data acquired indirectly as a result of recognizing, analyzing, assaying, presuming voice data.

Next, the utterance meaning analyzing section 201 of the server 2 conducts the meaning analysis of the user's utterance on the basis of the utterance information, and, extracts a retrieval condition and a retrieval keyword (Step S115).

Then, the server 2 performs retrieval from the user registration information memorized in the user registration information memorizing section 22 by the information retrieving section 202 using the extracted retrieval condition and retrieval keyword (Step S118).

Next, the server 2 acquires the context information accumulated by the context recognizing section 203 (Step S121).

Then, the server 2 creates the candidates of response information corresponding to the user's situation and peripheral environment by the response information creating section 204 on the basis of the retrieval results and the context information (Step S124).

Successively, the output control section 205 of the server 2 determines whether it is an optimal response timing, on the basis of the current context information (Step S127). In concrete terms, the output control section 205 determines whether the current situation satisfies the output starting condition, on the basis of the context information.

Then, in the case where it has been judged that it is an optimal response timing (Steps S127/Yes), the output control section 205 performs the optimal response output control correspondingly to the user's situation (the current context information). In concrete terms, for example, in the case where the output destination is the information processing apparatus 1 (the image output section 14, the voice output section 16, or the like), the output control section 205 transmits the output information (including the response information, the output starting condition, and the output ending condition) to the information processing apparatus 1 (Step S130), and the response information is output in the information processing apparatus 1 (Step S133). On the other hand, in the case where the output destination is the peripheral apparatuses 5, similarly, the output control section 205 transmits the output information to the peripheral apparatuses 5 (Step S136), and the response information is output in the peripheral apparatuses 5 (Step S139).

In this connection, the processing according to the present embodiment is not limited to the example shown in FIG. 9, for example, the server 2 may transmit the candidates of a plurality of pieces of response information to the information processing apparatus 1, and the local output control section 126 of the information processing apparatus 1 may determine an optimal response timing, and, may control the output from the information processing apparatus 1 or the output from the peripheral apparatuses 5 connected through a home network 4.

### <4. Conclusion>

As mentioned above, in the information processing apparatus 1 according to the embodiment of the present disclosure, a response is created correspondingly to a context and is output, whereby it makes it possible to perform a response that is suitable under various environments and is easy to understand.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, it is also possible to create a computer program in order to make hardware such as a CPU, a ROM, and a RAM incorporated in the above-mentioned information processing apparatus 1 exhibit the function of the information processing apparatus 1. Moreover, a computer-readable memory medium made to memorize the computer program is also provided.

Moreover, in the present embodiment, with reference to FIG. 2, it has been described as the system including the information processing apparatus 1 and the server 2. However, the present embodiment should not be limited to this, and may be made to a constitution where the information processing apparatus 1 performs all the processing performed by the server 2, and it may be realized by a single body of the information processing apparatus 1. For example, the information processing apparatus 1 may have a constitution including the constitution (terminal side module) described with reference to FIG. 4 and the constitution (server side module) described with reference to FIG. 5.

Moreover, the system constitution according to the present embodiment should not be limited to the example shown in FIG. 2, and, for example, may be a system including an edge server between the information processing apparatus 1 and the server 2. The edge server includes a subset (external subset) that corresponds to at least any of the utterance meaning analyzing section 201, the information retrieving section 202, the context recognizing section 203, the response information creating section 204, or the user registration information memorizing section 22. The external subset of the edge server has a performance higher than that of the subset (internal subset) of the information processing apparatus 1.

In this connection, a dialog between the information processing apparatus 1 according to the present embodiment and a user should not be limited to voice, and may be a gesture (sign language, body gesture and hand gesture) and a text (chat). In this case, an interaction is realized via, for example, input and the like by a display equipped with a touch panel or by a display and a keyboard.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.
(1) An information processing apparatus, including:
   a first transmitting section configured to transmit utterance information that has been input;
   a second transmitting section configured to transmit context information that has been acquired; and
   an output control section configured to perform control such that response information for the utterance information is output to an output destination determined on a basis of the context information.
(2) An information processing apparatus, including:
   a first receiving section configured to receive utterance information that has been input;
   a second receiving section configured to receive context information that has been acquired; and
   an output control section configured to perform control such that response information created on a basis of the utterance information is output to an output destination determined on a basis of the context information.
(3) The information processing apparatus according to (1) or (2), in which the output control section outputs output information including the response information and an output starting condition and an output ending condition that correspond to the context information, to the output destination.
(4) The information processing apparatus according to any one of (1) to (3), in which the response information includes information of a response content, an output format, and an output destination.
(5) The information processing apparatus according to (4), in which the output format indicates voice output, text output, image output, or optical output.
(6) The information processing apparatus according to (4) or (5), in which the output destination indicates the information processing apparatus, a voice output apparatus, a display apparatus, an information processing terminal, or a lighting apparatus.
(7) The information processing apparatus according to any one of (4) to (6), in which the response content is changed in accordance with a speaking person.
(8) The information processing apparatus according to any one of (4) to (7), in which the response content is changed in accordance with the output format.
(9) The information processing apparatus according to any one of (1) to (8), in which the output control section performs output control in accordance with real time context information.
(10) An information processing method, including:
   by a processor,
   transmitting utterance information that has been input;
   transmitting context information that has been acquired; and
   performing control such that response information for the utterance information is output to an output destination determined on a basis of the context information.
(11) An information processing method, including:
   by a processor,
   receiving utterance information that has been input;
   receiving context information that has been acquired; and
   performing control such that response information created on a basis of the utterance information is output to an output destination determined on a basis of the context information.

### Reference Signs List

- 1: information processing apparatus
- 10: voice input section
- 11: voice recognizing section
- 12: control section
- 13: communication section
- 14: image output section
- 15: voice synthesizing section
- 16: voice output section
- 121: local utterance meaning analyzing section
- 122: local user registration information memorizing section
- 123: local information retrieving section
- 124: local context recognizing section
- 125: local response information creating section
- 126: local output control section
- 2: server
- 20: control section
- 201: utterance meaning analyzing section
- 202: information retrieving section
- 203: context recognizing section
- 204: response information creating section
- 205: output control section
- 21: communication section
- 22: user registration information memorizing section
- 3: network
- 4: home network
- 5: peripheral apparatus

## Claims

1. An information processing apparatus, comprising:
a first transmitting section configured to transmit utterance information that has been input;
a second transmitting section configured to transmit context information that has been acquired; and
an output control section configured to perform control such that response information for the utterance information is output to an output destination determined on a basis of the context information.

2. An information processing apparatus, comprising:
a first receiving section configured to receive utterance information that has been input;
a second receiving section configured to receive context information that has been acquired; and
an output control section configured to perform control such that response information created on a basis of the utterance information is output to an output destination determined on a basis of the context information.

3. The information processing apparatus according to claim 2, wherein the output control section outputs output information including the response information and an output starting condition and an output ending condition that correspond to the context information, to the output destination.

4. The information processing apparatus according to claim 2, wherein the response information includes information of a response content, an output format, and an output destination.

5. The information processing apparatus according to claim 4, wherein the output format indicates voice output, text output, image output, or optical output.

6. The information processing apparatus according to claim 4, wherein the output destination indicates the information processing apparatus, a voice output apparatus, a display apparatus, an information processing terminal, or a lighting apparatus.

7. The information processing apparatus according to claim 4, wherein the response content is changed in accordance with a speaking person.

8. The information processing apparatus according to claim 4, wherein the response content is changed in accordance with the output format.

9. The information processing apparatus according to claim 2, wherein the output control section performs output control in accordance with real time context information.

10. An information processing method, comprising:
by a processor,
transmitting utterance information that has been input;
transmitting context information that has been acquired; and
performing control such that response information for the utterance information is output to an output destination determined on a basis of the context information.

11. An information processing method, comprising:
by a processor,
receiving utterance information that has been input;
receiving context information that has been acquired; and
performing control such that response information created on a basis of the utterance information is output to an output destination determined on a basis of the context information.

## Amended claims

### Amended claims under Art. 19.1 PCT

1. (Amended) An information processing apparatus, comprising:
a first transmitting section configured to transmit utterance information that has been input;
a second transmitting section configured to transmit context information that has been acquired; and
an output control section configured to perform control such that response information for the utterance information is output to an output destination determined on a basis of the context information,
wherein the context information includes speaking person information, and
the response information includes a response content changed to a content capable of being understood by a speaking person on a basis of the speaking person information.

2. (Amended) An information processing apparatus, comprising:
a first receiving section configured to receive utterance information that has been input;
a second receiving section configured to receive context information that has been acquired; and
an output control section configured to perform control such that response information created on a basis of the utterance information is output to an output destination determined on a basis of the context information.
wherein the context information includes speaking person information, and
the response information includes a response content changed to a content capable of being understood by a speaking person on a basis of the speaking person information.

3. The information processing apparatus according to claim 2, wherein the output control section outputs output information including the response information and an output starting condition and an output ending condition that correspond to the context information, to the output destination.

4. The information processing apparatus according to claim 2, wherein the response information includes information of a response content, an output format, and an output destination.

5. The information processing apparatus according to claim 4, wherein the output format indicates voice output, text output, image output, or optical output.

6. The information processing apparatus according to claim 4, wherein the output destination indicates the information processing apparatus, a voice output apparatus, a display apparatus, an information processing terminal, or a lighting apparatus.

7. The information processing apparatus according to claim 4, wherein the response content is changed in accordance with a speaking person.

8. The information processing apparatus according to claim 4, wherein the response content is changed in accordance with the output format.

9. The information processing apparatus according to claim 2, wherein the output control section performs output control in accordance with real time context information.

10. (Amended) The information processing apparatus according to claim 2, wherein
the context information includes visual line information of a speaking person, and
the output destination is determined on a basis of the visual line information of the speaking person.

11. (Amended) An information processing method, comprising:
by a processor,
transmitting utterance information that has been input;
transmitting context information that has been acquired; and
performing control such that response information for the utterance information is output to an output destination determined on a basis of the context information,
wherein the context information includes speaking person information, and
the response information includes a response content changed to a content capable of being understood by a speaking person on a basis of the speaking person information.

12. (New) An information processing method, comprising:
by a processor,
receiving utterance information that has been input;
receiving context information that has been acquired; and
performing control such that response information created on a basis of the utterance information is output to an output destination determined on a basis of the context information,
wherein the context information includes speaking person information, and
the response information includes a response content changed to a content capable of being understood by a speaking person on a basis of the speaking person information.
